# EUROPEAN PATENT APPLICATION

(11) **EP 0 930 484 A1**
(43) Date of publication of application: **21.07.1999**
(21) Application number: 99200155.2
(22) Date of filing: 19.01.1999
(51) Int. Cl.: G01G 19/02

(54) **A system and a method for weighing a vehicle**

(30) Priority: 20.01.1998 NL 1008073
(71) Applicant: Veenhuis Machines B.V., NL-8102 HE Raalte (NL)
(72) Inventor: Veenhuis, Theodorus Josef Maria, 8102 HE Raalte (NL)
(74) Representative: Louet Feisser, Arnold

(57) **Abstract**

A system comprising a transportable device for weighing a vehicle and a truck for transporting said device. The device comprises a frame, onto which the vehicle can be driven in longitudinal direction. The frame is provided with a number of supporting elements, by means of which it can be supported on a ground surface, which supporting elements comprise sensors for measuring the supporting force. The truck is capable of riding over at least part of the frame with its wheels, and the frame is provided with at least one recess, within which said wheels of the truck can be supported on the ground surface. The system comprises means for interconnecting the device and the truck in the position wherein said wheels are positioned within said recess or recesses.

## Description

The invention relates to a system comprising a transportable device for weighing a vehicle and a truck for transporting said device, which device comprises a frame, onto which the vehicle can be driven in longitudinal direction, which frame is provided with a number of supporting elements, by means of which it can be supported on a ground surface, which supporting elements comprise sensors for measuring the supporting force.

Such a system can be used for weighing a vehicle at random locations, wherein the vehicle is driven onto the device, whereupon each of the supporting elements measures and registers the respective supporting force, after which the weight of the vehicle can be determined by adding up the various supporting forces that have been measured and subsequently subtracting the weight of the device from the sum of said supporting forces. Of course it is also possible to determine the weight of the vehicle by measuring, in each of the supporting elements, the difference in the supporting force between the situation wherein the vehicle is present on the device and the situation wherein no vehicle is present on the device.

Such a device often has large dimensions, at least in plan view, because it must also be possible to drive larger vehicles completely onto the device. Said large dimensions make it difficult to transport such a device. A construction wherein the device can be taken apart into smaller parts for transporting the device is difficult to realise, since this would have an adverse effect on the very great strength that is required of such a device.

The objective of the invention is to provide a system wherein such a device can be transported without there being a need to disassemble the device into separate parts.

In order to accomplish that objective, the truck is constructed in such a manner that it is capable of riding over at least part of the frame of the device with its wheels, and the frame is provided with at least one recess, within which said wheels of the truck can be supported on said ground surface, wherein the system comprises means for interconnecting the device and the truck in the position wherein said wheels are positioned within said recess or recesses.

When transporting the device, whereby the device is connected to the truck in the above-described manner, the dimension of the whole to be transported equals the dimension of the device (in plan view). Since the device has a dimension which corresponds with the dimension of a vehicle, at least in transverse direction, the truck, together with the device, can be transported over the same road as the vehicles to be weighed.

Preferably, the truck is a trailer, which can be coupled to a tractive vehicle. The trailer may have two wheels, which are spaced apart by such a distance that the width of said pair of wheels substantially equals the width of the device. This provides maximum stability during transport, whilst the wheels do not extend beyond the device in transverse direction.

In one preferred embodiment, the frame is provided on either side with a strip which forms a track which extends in longitudinal direction, over which track the wheels of a vehicle to be weighed can ride, which strip is provided with a closable recess, and the spacing between the truck wheels is such that said wheels can ride over said strips, wherein the wheels can be placed into the closable recesses when said recesses are not closed. During use of the device, the vehicles to be weighed can drive over the device in longitudinal direction, wherein the vehicles ride with their wheels over a hatch which closes the recess. When the truck is driven over the device, said hatches will be opened, so that each of the two wheels of the truck will land in a recess, whereby it will be supported on the ground. Accordingly, the wheels of the truck ride at the same place of the device as do the wheels of the vehicles to be weighed, so that no additional measures are required for enabling the truck to drive over the device.

In one preferred embodiment of the invention, the frame comprises at least two parts which are pivotally interconnected by means of a substantially horizontal pivot pin, which two parts are each provided with at least one supporting element. It is possible thereby to reduce the length of the device during transport without having to disassemble the device into parts. By providing the two parts with the necessary supporting elements, a collapsible weighing device of this kind is capable of operating without the two parts being interconnected in any manner other than pivotally.

The first part preferably comprises at least three, more preferably four, supporting elements thereby, and the second part preferably comprises one or two supporting elements, which parts are pivotally interconnected by means of a substantially horizontal pivot pin.

In another preferred embodiment, the frame consists of a first part, which is provided with four supporting elements, and a second and a third part, which are each pivotally connected to said first part by means of substantially horizontal pivot pins and which are each provided with two supporting elements.

In another embodiment, the frame consists of a first part, which is provided with four supporting elements, and four parts which are each pivotally connected to said first part by means of substantially horizontal pivot pins and which are each provided with one supporting element, which four parts are all in line with two strips present on either side of the frame, over which strips the wheels of a vehicle to be weighed can ride.

A device for weighing vehicles which consists of several pivotally interconnected parts as described above can be considered to constitute a separate invention besides the above-described system.

The invention furthermore relates to methods for weighing a vehicle as defined in the claims.

Hereafter a system for weighing a vehicle will be explained in more detail by way of illustration, wherein reference will be made to the drawing.
Figure 1 is a plan view of a device for weighing;
Figure 2 is a side view of the device;
Figure 3 is a plan view of a truck;
Figures 4 and 5 are side views of said truck; and
Figures 6 - 8 show a method for transporting the device.

The Figures are merely schematic representations, wherein only those parts are shown that are relevant for the explanation.

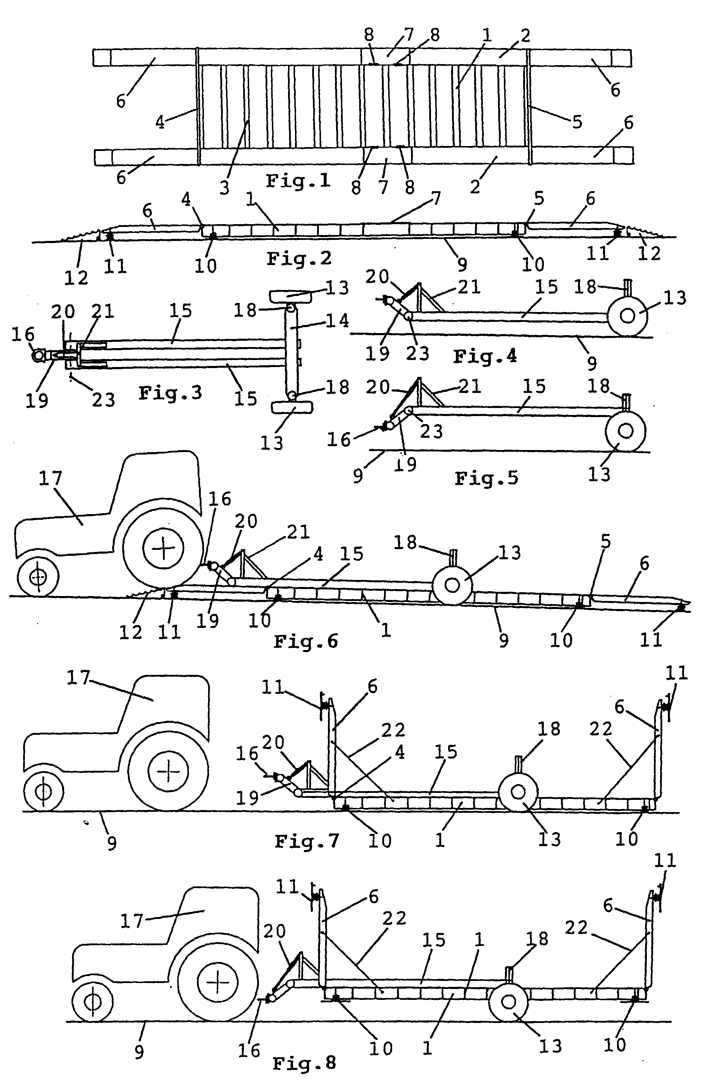

Figure 1 shows in plan view a device for weighing a vehicle, which device comprises a first part 1 which is provided with a strip 2 on either side, over which the wheels of a vehicle to be weighed can ride. The first part 1 is made up of a metal frame of great strength, whereby the necessary cross beams 3 are mounted between the two strips 2.

In line with said strips 2 are four parts 6, which are each pivotally connected to said first part 1 by means of a pivot pin 4, 5. This makes it possible to pivot each part 6 upwards when first part 1 occupies a horizontal position on a ground.

Each of the strips 2 comprises a hatch 7, which can be pivoted about pivot pin 8 from the position which is shown in Figure 1, wherein hatch 7 forms part of strips 2, to a position wherein each strip 2 is interrupted by a recess.

Figure 2 shows the device in side view, wherein the device is supported on ground 9. The device is thereby supported by supporting elements 10, 11. First part 1 is supported by four supporting elements 10, with a supporting element 10 being provided near each corner point. Each part 6 is furthermore supported on ground 9via a supporting element 11. Accordingly, 8 supporting elements 10, 11 are present in the present embodiment.

It will be apparent that the weight of a vehicle which is present on the device and which is to be weighed can be determined by measuring the supporting force in each of the supporting elements 10, 11 and to add up all the supporting forces that have been measured. This procedure can be repeated when no vehicle is present on the device. The difference between the two measurements equals the weight of the vehicle.

Figure 2 shows separate elements 12 present at the end of the device, over which the vehicle to be weighed can be driven in order to be correctly positioned on the device, wherein the wheels of the vehicle to be weighed are present on strips 2.

Figure 3 shows a truck in plan view, which truck can be used for transporting the device according to Figures 1 and 2. The truck has two wheels 13, which are spaced apart by such a distance that the width of the pair of wheels 13 substantially corresponds with the width of the device. The two wheels 13 are interconnected by a cross beam 14, to which two longitudinal beams 15 are connected. A drawbar eye 16, by means of which the truck can be coupled to a tractive vehicle 17, is present on the front side of longitudinal beams 15.

Figures 4 and 5 show the truck in side view, and that in two different positions. In Figure 4 the longitudinal beams 15 occupy a low position, and in Figure 5 the longitudinal beams 15 occupy a high position.

The vertical movement of the longitudinal beams 15 is achieved on the one hand by moving cross beam 14 in vertical direction with respect to wheels 13 by means of hydraulic cylinders 18, and on the other hand by pivoting pivot arm 19 about pivot 23 by means of hydraulic cylinder 20. Hydraulic cylinder 20 is attached on the one hand to pivot arm 19 and on the other hand to a fastening element 21, which is provided on longitudinal beams 15.

The operation of the hydraulic cylinders is not shown in the figures. The truck may also be fitted with mechanically operating elements, however, rather than with hydraulic cylinders 18, 20, for example an element comprising a spindle.

When the device as shown in Figures 1 and 2 is to be transported, the truck is driven over the device by means of a tractive vehicle 17, whereby hatches 7 are opened before wheels 13 of the truck reach said hatches. As a result of this, the wheels 7 will land in the recess in the device, which is released by swinging clear the hatches 7, after which the wheels 13 will be supported on ground 9. This situation is shown in Figure 6.

In this situation, the tractive vehicle 17 is uncoupled from the truck, after which the truck, more in particular longitudinal beams 15, is connected to the device by clamps (not shown) or other connecting elements.

Parts 6 are then pivoted upwards about pivot pins 4, 5, which parts can be fixed in their upward position by means of ropes 22. This situation is shown in Figure 7.

Then the tractive vehicle 17 is coupled to the truck again and longitudinal beams 15 and the device are moved upwards by means of hydraulic cylinders 18, 20. Once the situation as shown in Figure 8 is reached, the device can be transported by drawing the truck by means of tractive vehicle 17.

The illustrated embodiment is to be considered an example, also other embodiments and variants are possible.

## Claims

1. A system comprising a transportable device for weighing a vehicle and a truck for transporting said device, which device comprises a frame, onto which the vehicle can be driven in longitudinal direction, which frame is provided with a number of supporting elements, by means of which it can be supported on a ground surface, which supporting elements comprise sensors for measuring the supporting force, and wherein the truck is capable of riding over at least part of the frame with its wheels, and the frame is provided with at least one recess, within which said wheels of the truck can be supported on said ground surface, wherein the system comprises means for interconnecting the device and the truck in the position wherein said wheels are positioned within said recess or recesses.

2. A system according to claim 1, characterized in that said truck is a trailer, which can be coupled to a tractive vehicle.

3. A system according to claim 2, characterized in that said trailer has two wheels, which are spaced apart by such a distance that the width of said pair of wheels substantially equals the width of the the device.

4. A system according to claim 3, characterized in that the frame is provided on either side with a strip which forms a track which extends in longitudinal direction, over which track the wheels of a vehicle to be weighed can ride, which strip is provided with a closable recess, and the spacing between the truck wheels is such that said wheels can ride over said strips, wherein the wheels can be placed into the closable recesses when said recesses are not closed.

5. A system according to any one of the preceding claims, characterized in that the frame comprises at least two parts which are pivotally interconnected by means of a substantially horizontal pivot pin, which two parts are each provided with at least one supporting element.

6. A system according to claim 5, characterized in that the frame comprises a first part, which comprises at least three, preferably four supporting elements, and a second part, which comprises at least one, preferably two supporting elements, which parts are pivotally interconnected by means of a substantially horizontal pivot pin.

7. A system according to claim 5, characterized in that the frame consists of a first part, which is provided with four supporting elements, and a second and a third part, which are each pivotally connected to said first part by means of substantially horizontal pivot pins and which are each provided with two supporting elements.

8. A system according to claim 5, characterized in that the frame consists of a first part, which is provided with four supporting elements, and four parts which are each pivotally connected to said first part by means of substantially horizontal pivot pins and which are each provided with one supporting element, which four parts are all in line with two strips present on either side of the frame, over which strips the wheels of a vehicle to be weighed can ride.

9. A transportable device for weighing a vehicle, which device comprises a frame, onto which the vehicle can be driven in longitudinal direction, which frame is provided with a number of supporting elements, by means of which it can be supported on a ground surface, which supporting elements comprise sensors for measuring the supporting force, wherein said frame comprises at least two parts, which are pivotally interconnected by means of a substantially horizontal pivot pin, which two parts are each provided with at least one supporting element.

10. A device according to claim 9, characterized in that said frame comprises three parts, which are pivotally interconnected by means of substantially horizontal pivot pins, which two parts are each provided with supporting elements.

11. A device according to claim 9, characterized in that the frame consists of a first part, which is provided with four supporting elements, and four parts which are each pivotally connected to said first part by means of substantially horizontal pivot pins and which are each provided with one supporting element, which four parts are all in line with two strips present on either side of the frame, over which strips the wheels of a vehicle to be weighed can ride.

12. A truck for transporting a transportable device for weighing vehicles, characterized in that said truck is a trailer comprising two wheels, which comprises means for engaging the device on the underside of the truck, and which comprises means for moving the device in upward direction with respect to said wheels.

13. A method for weighing a vehicle, wherein a device for carrying out said weighing is transported to a location by driving a truck over said device until the wheels of said truck land in recesses which are present in the device, in which position said wheels are supported on the ground, whereupon the device is connected to the truck and moved upwards with respect to the wheels of the truck, after which the device is transported to the location in question.

14. A method for weighing a vehicle, wherein the vehicle is driven onto a device which is supported on the ground with at least five supporting elements, at least one of which supporting elements is attached to a part of the device that is pivotally connected to another part of the device, to which likewise at least one supporting element is attached.
